# EUROPÄISCHE PATENTSCHRIFT

(11) **EP 2 161 643 B1**
(45) Veröffentlichungstag und Bekanntmachung des Hinweises auf die Patenterteilung: **06.11.2013**
(21) Anmeldenummer: 09010792.1
(22) Anmeldetag: 01.09.2009
(51) Int. Cl.: G05G 1/10, G05G 5/03

(54) **Bedieneinrichtung**
Operating device
Dispositif de commande

(30) Priorität: 04.09.2008 DE 102008041806
(43) Veröffentlichungstag der Anmeldung: 10.03.2010
(73) Patentinhaber: Dietrich, Frank, 73760 Ostfildern (DE)
(72) Erfinder: Dietrich, Frank, 73760 Ostfildern (DE)
(74) Vertreter: Patentanwälte Ruff, Wilhelm, Beier, Dauster & Partner

(56) Entgegenhaltungen:
- DE-A1- 4 109 544
- DE-A1- 10 126 076
- GB-A- 2 199 926
- US-A- 4 647 889

## Beschreibung

Die Erfindung betrifft eine Bedieneinrichtung mit einem bewegbaren Bedienelement.

Bedieneinrichtungen betreffen zum Beispiel Drehregler oder Schieberegler, mit denen Einstellungen vorgenommen werden. Es gibt sowohl Bedieneinrichtungen, mit denen eine kontinuierliche und damit auch stufenlose Verstellung durchgeführt werden kann, als auch Bedieneinrichtungen, bei denen beim Verstellen eine Rastung fühlbar ist. Je nach dem gewünschten Anwendungszweck können solche fühlbaren Verrastungen sinnvoll sein. Zur Durchführung der Verrastungen sind üblicherweise mechanische Mittel vorhanden, bei denen also ein Rastelement an vielen Positionen in eine Vertiefung gelangt, in der es mit einer gewissen Kraft festgehalten wird. Dies kann zum Beispiel mit Federn geschehen.

Derartige mechanische Rastungen sind aufwändig und benötigen Platz. In Kraftfahrzeugen sind auch magnetische Rastungen bekannt, die aber in einem aufwändigen mechanischen Aufbau untergebracht sind.

Es ist bereits ein Schalter mit einem um eine Welle drehbar gelagerten einen Magneten aufweisenden Knopf bekannt, längs dessen Bewegungsbahn eine Vielzahl von umgekehrt gepolten Permanentmagneten angeordnet ist. Dadurch hat der Schalter eine der Zahl von Magneten entsprechende Zahl von stabilen Positionen (GB 2199926 A).

Ebenfalls bekannt ist ein Impulsgeber mit einer drehbar gelagerten Magnetscheibe, die über ihren Umfang verteilt Magnetpole mit abwechselnder Polarität aufweist und gegenüber einer ortsfesten Scheibe mit Magnetpolen unterschiedlicher Polarität verdrehbar ist. Dadurch wird auf die Magnetscheibe eine rastende Haltekraft ausgeübt (DE 10126076 A1).

Der Erfindung liegt die Aufgabe zu Grunde, eine einfach aufgebaute und kostengünstige Lösung für eine Bedieneinrichtung mit Rastung zu schaffen.

Zur Lösung dieser Aufgabe schlägt die Erfindung eine Bedieneinrichtung mit den im Anspruch 1 genannten Merkmalen vor. Weiterbildungen der Erfindung sind Gegenstand von Unteransprüchen.

Die von der Erfindung vorgeschlagene Bedieneinrichtung enthält also ein Bedienelement, das gegenüber einem Träger bewegbar ist. Bei der Bewegung des Bedienelementes wird ein Magnet mitbewegt, und zwar längs einer Bewegungsbahn. Parallel zu dieser Bewegungsbahn ist auf dem Träger eine Reihe einer Vielzahl von ferromagnetischen Gegenelementen angeordnet. Der von dem Bedienelement mitbewegte Magnet hält das Bedienelement, wenn es nicht mehr verstellt wird, in einer Position, wo er dem nächsten Gegenelement gegenüber angeordnet ist. Falls beim Loslassen des Bedienelements der Magnet in einer Position zwischen zwei Gegenelementen angeordnet ist, bewegt er das Bedienelement in Richtung auf das Gegenelement, dem er am nächsten ist. Auf diese Weise wird eine Rastung der Bewegung des Bedienelements bewirkt, ohne dass die Rastung durch ein mechanisches Bewegen eines Bauteils bewirkt wird.

Um die genannte abwechselnd größere und kleinere Wirkung zwischen dem Magneten und den Gegenelementen zu bewirken, können diese beispielsweise einen Abstand voneinander aufweisen, so dass zwischen jeweils zwei Gegenelementen ein Raum vorhanden ist, in dem auf den Magneten keine Wirkung ausgeübt wird.

Es ist aber ebenfalls möglich und wird von der Erfindung vorgeschlagen, dass die Gegenelemente unterschiedlich dick oder unterschiedlich weit ausgebildet sind und auf diese Weise eine unterschiedlich starke Wirkung auf den Magneten ausüben. In diesem Fall können die Gegenelemente auch ohne einen gegenseitigen Abstand angeordnet werden.

Erfindungsgemäß **sind** die Gegenelemente mit einer siebdruckfähigen Ferritpaste auf dem Träger aufgebracht. Durch das Siebdruckverfahren lassen sich die Gegenelemente in unterschiedlichen Größen, Anordnungen, Dicken oder dergleichen herstellen. Als Träger kommt insbesondere eine Leiterplatte infrage.

Auch CU-Gegenelemente mit höheren Schichtstärken an chemischem Nickel sind geeignet.

In Weiterbildung der Erfindung kann vorgesehen sein, dass die Ausdehnung des Magneten in Richtung der Bewegungsbahn höchstens so groß ist wie die Ausdehnung eines Gegenelements in der gleichen Richtung, vorzugsweise kleiner.

Erfindungsgemäß kann in Weiterbildung vorgesehen sein, dass es sich bei dem Magneten um einen Permanentmagneten handelt, vorzugsweise aus seltenen Erden.

Der Magnet muss bei der Bewegung des Bedienelements ebenfalls bewegt werden, um die Rastung zu bewirken. Daher kann in Weiterbildung der Erfindung vorgesehen sein, dass der Magnet an dem Bedienelement selbst angebracht ist.

Es ist aber ebenfalls möglich und wird von der Erfindung vorgeschlagen, dass der Magnet an einem mit dem Bedienelement mitbewegten Zusatzelement angebracht ist.

Es ist natürlich auch möglich, wenn man mehrere Magnete verwendet, einen Magneten an dem Bedienelement und einen Magneten an dem Zusatzelement anzubringen.

Um die Wirkung des Magneten gut ausnutzen zu können, wird in Weiterbildung der Erfindung vorgeschlagen, dass die Gegenelemente auf der dem Bedienelement zugewandten Seite des Trägers angeordnet sind, insbesondere dann, wenn der Magnet an dem Bedienelement angebracht ist.

Es kann auch sinnvoll sein, die Gegenelemente auf der dem Bedienelement abgewandten Seite des Trägers anzuordnen, insbesondere dann, wenn das Zusatzelement ebenfalls auf der dem Bedienelement abgewandten Seite des Trägers angeordnet ist.

Es wurde bereits erwähnt, dass es im Rahmen der Erfindung liegt, einen Magneten an dem Bedienelement und einen Magneten an dem Zusatzelement anzubringen. Erfindungsgemäß kann nun vorgesehen sein, dass das Bedienelement derart ausgebildet ist, dass es abwechselnd entweder von dem Magneten an dem Bedienelement oder von dem Magneten an dem Zusatzelement gerastet wird.

Ebenfalls möglich ist es, das Bedienelement derart anzuordnen, dass ein Magnet oder auch mehrere Magnete abwechselnd mit zwei verschiedenen Reihen von Gegenelementen zusammenwirken. Dies gilt insbesondere dann, wenn das Bedienelement auch zum Bedienen zweier verschiedener Einrichtungen dienen soll.

Die Gegenelemente sind in einem gewissen Abstand voneinander angeordnet oder ihre abwechselnd größere oder kleinere Wirkung ist ebenfalls in einem bestimmten Abstand voneinander angeordnet. Diesen Abstand kann man auch als Rapport bezeichnen.

Die Erfindung sieht nun als eine Möglichkeit vor, dass der Rapport der Gegenelemente längs der Bewegungsbahn mindestens teilweise oder auch über die gesamte Bewegungsbahn konstant ist. Dann erhält man eine konstante Teilung bei der Rastung.

Es ist aber ebenfalls möglich und wird von der Erfindung vorgeschlagen, dass der Rapport der Gegenelemente längs der Bewegungsbahn mindestens teilweise variabel ist, sich also während der Bewegung des Bedienelements ändert. Beispielsweise kann in einer Art Nullstellung die Rastung enger sein, während sie gegen Ende des Verstellwegs weniger eng wird.

Erfindungsgemäß kann ebenfalls als weitere Maßnahme vorgesehen sein, dass der Abstand zwischen den Gegenelementen längs der Bewegungsbahn bei gleichem Rapport unterschiedlich ist.

Es ist durch die Verwendung dieser magnetischen Rastung möglich, auch die Stärke der Rastung längs des Bewegungswegs des Bedienelements variabel zu gestalten. So kann beispielsweise gegen Ende des Verstellwegs bei gleichem Rastabstand die Kraft zur Überwindung der Rastung größer werden.

Eine Möglichkeit, wie auch die Kraft zur Überwindung der Rastung verändert werden kann, besteht darin, die im Siebdruckverfahren aufgedruckten Gegenelemente in ihrer Ecke und/oder Größe zu ändern. Eine weitere Möglichkeit zur Einflussnahme auf die Charakteristiken der Rastung kann darin bestehen, dass der Zwischenraum zwischen zwei benachbarten Gegenelementen in seiner Orientierung geändert wird. Beispielsweise kann der Zwischenraum quer zur Bewegungsrichtung des Bedienelements verlaufen.

Eine andere Möglichkeit besteht darin, dass dieser Zwischenraum schräg zur Bewegungsrichtung des Bedienelements verläuft.

Es ist auch denkbar, dass der Zwischenraum nicht zwei parallele Begrenzungslinien aufweist, sondern zwei divergierende Begrenzungslinien.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: die Draufsicht auf einen Träger mit einer Rasteinrichtung für einen Drehregler;
- Figur 2: einen Querschnitt durch die Anordnung der Figur 1;
- Figur 3: ein Beispiel der Anordnung von Gegenelementen bei einem Schieberegler;
- Figur 4: eine weitere Art der Anordnung von Gegenelementen;
- Figur 5: eine dritte Art der Anordnung von Gegenelementen bei einem Schieberegler.

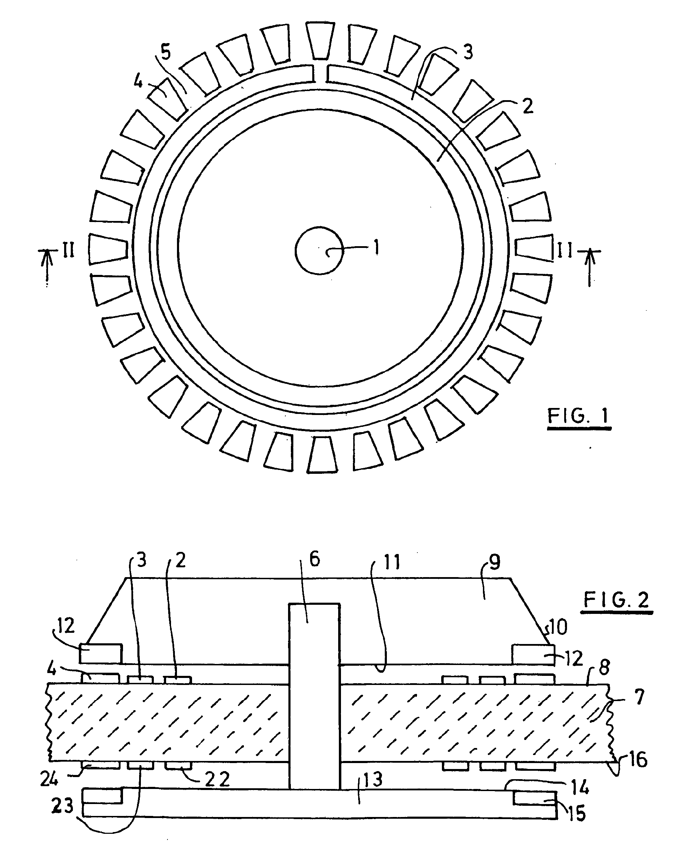

Figur 1 zeigt schematisch eine Draufsicht auf eine Leiterplatte als Träger für eine Bedieneinrichtung. Im dargestellten Beispiel handelt es sich um Potentiometer. In der Mitte des Trägers ist ein Loch 1 dargestellt, das eine Lagerung für die Achse des Bedienelements darstellen soll. Konzentrisch zu dieser Lagerung ist ein Schleifring 2 auf der Oberseite der Leiterplatte aufgebracht, der beispielsweise aus einer Kupferbeschichtung besteht. Mit geringem Abstand außerhalb des Schleifrings 2 ist ebenfalls konzentrisch ein unterbrochener Ring 3 aus einem Widerstandmaterial aufgedruckt. An einem Bedienelement ist dann ein Schleifkontakt angebracht, der eine Verbindung zwischen dem Schleifring 2 und dem Widerstandsring 3 herstellt. Auf diese Weise wird ein Potentiometer gebildet. Die Erfindung befasst sich nun damit, eine Rastung dieses Potentiometer zu bewirken. Zu diesem Zweck sind im dargestellten Beispiel außerhalb des Widerstandsrings 3 eine Vielzahl von Gegenelementen 4 angeordnet, die als Ferritpaste im Siebdruckverfahren aufgedruckt sind. Zwischen je zwei Gegenelementen 4 mit der ferromagnetischen Eigenschaft sind Zwischenräume 5 ausgebildet, die angenähert radial verlaufen, also quer zu der Bewegungsrichtung des Bedienelements beziehungsweise eines mit diesem verbundenen Magneten.

Die Gegenelemente 4 weisen angenähert die Form eines Kreisringsektors auf.

Nun zu Figur 2, die einen Querschnitt durch die Anordnung der Figur 1 zeigt. Der Querschnitt ist durch die Lagerung 1 gelegt, wobei jetzt die Achse 6 in dem Lagerungsloch 1 angeordnet ist. Der Träger 7 ist als Leiterplatte ausgebildet. Auf seiner in Figur 2 oberen und in Figur 1 zu sehenden Oberseite 8 sind von außen nach innen die Gegenelemente 4 angeordnet, dann der Widerstandsring 3 und anschließend der Schleifring 2 aus Kupferbeschichtung. Mithilfe der Achse 6 ist ein Bedienelement 9, beispielsweise ein Drehknopf, drehbar gelagert. Der Drehknopf 9 ist derart dimensioniert, dass seine radiale Außenseite 10 etwa mit dem Außendurchmesser der Anordnung der Gegenelemente 4 übereinstimmt. Die Unterseite 11 des Drehknopfs 9 liegt mit geringem Abstand vor der Oberseite 8 des Trägers 7. An dieser Unterseite 11 sind an der radialen Außenseite zwei Permanentmagnete 12 befestigt, wobei die Magnete 12 diametral angeordnet sind. Ihre Unterseite liegt mit dichtem Abstand oberhalb der Oberseite der Gegenelemente 4. An der Unterseite 11 des Drehknopfs 9 sind dann noch Schleifkontakte zur Darstellung des Potentiometers angeordnet, was im Einzelnen nicht dargestellt ist. Die Magnete 12 halten den Drehknopf in einer einmal eingenommenen Position, wobei dann jeder der beiden Magnete 12 direkt oberhalb eines Gegenelements 4 angeordnet ist. Es können auch mehr als zwei Magnete an dem Bedienelement angebracht sein.

Unterhalb des Trägers 7 ist an der Welle 6 drehfest ein Zusatzelement 13 angebracht, das die Form einer kreisrunden Platte aufweist. Der Durchmesser dieses Zusatzelements 13 entspricht etwa dem Durchmesser des Drehknopfs 9. Auf der dem Träger 7 zugewandten Oberseite 14 des Zusatzelements 13 sind im Randbereich ebenfalls zwei Permanentmagnete 15 eingelassen. Auch sie bestehen aus Seltenen Erden. Der Abstand der Oberseite 14 des Zusatzelements 13 von der Unterseite 16 des Trägers 7 ist größer als der Abstand zwischen der Unterseite 11 des Drehknopfs 9 und der Oberseite 8 des Trägers 7.

An der Unterseite des Trägers 7 ist eine ähnliche Anordnung aus Gegenelementen 24, einem Widerstandsring 23 und einem Schleifring 22 vorhanden, wie an der Oberseite 8 des Trägers 7. Ein an der Oberseite 14 des Zusatzelements 13 vorhandener Schleifkontakt steht in der dargestellten Position nicht in Verbindung mit dem Schleifring 22 und dem Widerstandsring 23.

In der dargestellten Position wirkt die Bedieneinrichtung als Potentiometer zwischen dem Schleifring 2 und dem Widerstandsring 3. Wird nun das Bedienelement 9 aus der dargestellten Position nach oben geschoben, was durch eine zusätzliche beispielsweise mechanische, vorzugsweise magnetische Rastung bewirkt werden kann, so wirkt dann beim Verdrehen des Bedienelements nur die an der Unterseite des Trägers 7 angeordnete Anordnung aus Schleifring 22, Widerstandsring 23 als anderes Potentiometer. Zur Verrastung dieser zweiten Bedieneinrichtung dienen dann die an der Unterseite des Trägers 7 angeordneten Magnete 15 und Gegenelemente 24.

Zur Vergrößerung der Festlegung in den einzelnen Rastpositionen können statt eines oder zweier Permanentmagnete auch mehrere Permanentmagnete verwendet werden. Es ist selbstverständlich auch möglich, das Zusatzelement 13 an der Unterseite des Trägers 7 mit dem gleichen Abstand zu versehen, den das Bedienelement 9 an der Oberseite 8 des Trägers 7 aufweist. Dann können grundsätzlich auch die Magnete 15 und Gegenelemente 24 an der Unterseite bei der Verstellung des Bedienelements 9 wirksam sein.

Ebenfalls möglich ist es natürlich, dass an der Unterseite des Trägers kein Potentiometer vorhanden ist, sondern eine andere Einrichtung durch den Drehknopf 9 bedient wird.

Was in den Figuren 1 und 2 für einen Drehregler dargestellt wurde, gilt selbstverständlich auch für einen Schieberegler. Auch hier wird ein Bedienelement durch eine mechanische Führung längs eines bestimmten Wegs verschiebbar angeordnet. Parallel zu diesem Weg können dann ebenfalls Gegenelemente aus ferromagnetischem Material angeordnet werden, die Zwischenräume zwischen sich aufweisen.

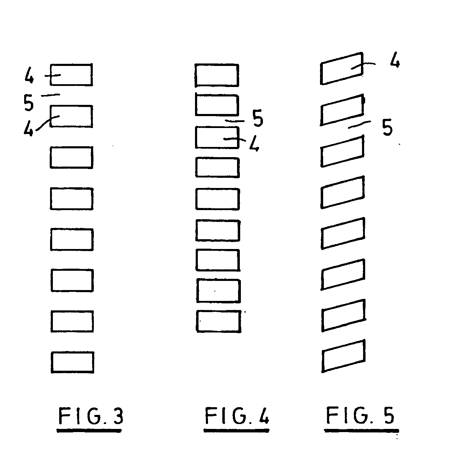

Eine Art der Anordnung von Gegenelementen bei einem Schieberegler ist in Figur 3 dargestellt. Hier sind die Gegenelemente 4 in Form von Rechtecken dargestellt, zwischen denen Zwischenräume vorhanden sind. Der gegenseitige Abstand der Gegenelemente 4 bildet den Rapport oder anders ausgedrückt das Rastermaß eine Bedieneinrichtung, die mit diesem Gegenelementen 4 zusammenwirkt.

Bei gleicher Größe der Gegenelemente 4, die ja die Kraft der Rastung bestimmen, lässt sich der Rapport dadurch ändern, dass der Zwischenraum 5 zwischen zwei Gegenelementen verkleinert wird. Dies ist in Figur 4 dargestellt. Hier sind die Gegenelemente 4 mit der gleichen Größe versehen wie in Figur 3, während der Abstand 5 zwischen zwei Gegenelementen 4 nur halb so groß ist.

Bei den Ausführungsformen der Figur 1, 3 und 4 verlaufen die Zwischenräume 5 zwischen zwei Gegenelementen 4 quer zur Bewegungsrichtung des mit den Gegenelementen 4 zusammenwirkenden Magneten 12. In Figur 1 ist noch zu sehen, dass die Zwischenräume 5 zwischen den Gegenelementen 4 keine parallelen Seitenkanten aufweisen. Dagegen weisen die Zwischenräume fünf zwischen den Gegenelementen vier bei der Ausführungsform nach Figur drei und vier parallelen Seitenkanten auf. Auch diese Änderung der Form der Gegenelemente vier und damit der Zwischenräume fünf zwischen ihnen kann zur Gestaltung der Charakteristik der Rastung verwendet werden.

Eine weitere Möglichkeit, wie man auf die Charakteristik der Rastung und damit der Haptik des Bedienelements Einfluss nehmen kann, ist in Figur 5 dargestellt. Hier verlaufen die Zwischenräume 5 zwischen zwei Gegenelementen 4 ebenso wie die Gegenelemente 4 selbst schräg zur Bewegungsrichtung des als Schieberegler gedachten Bedienelements. Damit lässt sich ein weicherer Übergang zwischen zwei Raststellungen bewirken.

## Patentansprüche

1. Bedieneinrichtung, mit
1.1 **einem Träger (7) und einem diesem gegenüber** bewegbaren Bedienelement (9),
1.2 mindestens einem von dem Bedienelement (9) bei dessen Bedienbewegung längs einer Bewegungsbahn mitgeführten Magneten (12, 15), sowie mit
1.3 einer Vielzahl von Gegenelementen (4) mit ferromagnetischer Eigenschaft, die
1.4 parallel zu der Bewegungsbahn des Magneten (12, 15) mit geringem Abstand zu diesem an dem Träger (7) angeordnet sind,
1.5 eine längs der Bewegungsbahn des Magneten (12, 15) abwechselnd größere und kleinere Wirkung auf diesen bewirken **dadurch gekennzeichnet, dass** die Gegenelemente (4)
1.6 **aus einer auf den Träger aufgebrachten siebdruckfähigen Ferritpaste ausgebildet sind.**

2. Bedieneinrichtung nach Anspruch 1, bei der die Gegenelemente (4) mit der ferromagnetischen Eigenschaft einen gegenseitigen Abstand aufweisen.

3. Bedieneinrichtung nach Anspruch 1 oder 2, bei der die Gegenelemente (4) eine unterschiedliche Dicke und/oder Breite aufweisen.

4. Bedieneinrichtung nach einem der vorhergehenden Ansprüche, bei der die Ausdehnung des Magneten (12, 15) in Richtung der Bewegungsbahn höchstens so groß ist wie die Ausdehnung eines Gegenelements (4) in der gleichen Richtung.

5. Bedieneinrichtung nach einem der vorhergehenden Ansprüche, bei der der Magnet (12, 15) ein Permanentmagnet ist, insbesondere aus einem Seltenen Erden- Material.

6. Bedieneinrichtung nach einem der vorhergehenden Ansprüche, bei der der Magnet (12) an dem Bedienelement (9) angebracht ist.

7. Bedieneinrichtung nach einem der vorhergehenden Ansprüche, bei der ein Magnet (15) an einem mit dem Bedienelement (9) mitbewegten Zusatzelement (13) angebracht ist.

8. Bedieneinrichtung nach einem der vorhergehenden Ansprüche, bei dem Gegenelemente (4) auf der dem Bedienelement (9) zugewandten Seite des Trägers (7) angeordnet sind.

9. Bedieneinrichtung nach einem der vorhergehenden Ansprüche, bei dem Gegenelemente (4) auf der dem Bedienelement (9) abgewandten Seite des Trägers (7) angeordnet sind.

10. Bedieneinrichtung nach einem der vorhergehenden Ansprüche, bei der das Bedienelement (9) zwischen zwei Positionen umschaltbar ist, wobei es in jeder der beiden Positionen gegenüber dem Träger (7) bewegbar ist und mindestens einen Magneten (12, 15) längs einer Vielzahl von ferromagnetischen Gegenelementen (4, 24) bewegt.

11. Bedieneinrichtung nach einem der vorhergehenden Ansprüche, bei der der Rapport der Gegenelemente (4, 24) längs der Bewegungsbahn mindestens teilweise konstant ist.

12. Bedieneinrichtung nach einem der vorhergehenden Ansprüche, bei der der Rapport der Gegenelemente (4, 24) längs der Bewegungsbahn mindestens teilweise variabel ist.

13. Bedieneinrichtung nach einem der vorhergehenden Ansprüche, bei der der Abstand zwischen den Gegenelementen (4, 24) bei gleichem Rapport verschieden ist.

14. Bedieneinrichtung nach einem der vorhergehenden Ansprüche, bei der der Zwischenraum zwischen zwei benachbarten Gegenelementen (4, 24) quer zur Bewegungsrichtung des Magneten (12, 15) verläuft.

15. Bedieneinrichtung nach einem der vorhergehenden Ansprüche, bei der der Zwischenraum (5) zwischen zwei benachbarten Gegenelementen (4, 24) schräg zur Bewegungsrichtung des Magneten (12, 15) verläuft.

## Claims

1. An operating device comprising
1.1 a support (7) and an operating element (9) displaceable relative thereto,
1.2 at least one magnet (12, 15) entrained by the operating element (9) during operating moves thereof along a movement path, and comprising
1.3 a plurality of counterelements (4) having ferromagnetic characteristics
1.4 arranged on the support (7) in parallel to the movement path of the magnet (12, 15) in a short distance to the magnet,
1.5 to cause alternating greater and smaller effects on the magnet (12, 15) along the movement path of the magnet,
**characterized in that**
1.6 the counterelements (4) are made of a ferrite paste utile in screen printing and applied to the support.

2. The operating device according to claim 1, wherein the counterelements (4) having the ferromagnetic characteristics are spaced to one another.

3. The operating device according to claim 1 or 2, wherein the counterelements (4) differ in thickness and/or width.

4. The operating device according to any of the preceding claims, wherein the extension of the magnet (12, 15) in the direction of the movement path has at maximum the extension of a counterelement (4) in the same direction.

5. The operating device according to any of the preceding claims, wherein the magnet (12, 15) is a permanent magnet, in particular made of a rare earth material.

6. The operating device according to any of the preceding claims, wherein the magnet (12) is attached to the operating element (9).

7. The operating device according to any of the preceding claims, wherein one magnet (15) is attached to an additional element (13) moved together with the operating element (9).

8. The operating device according to any of the preceding claims, wherein counterelements (4) are arranged on the side of the support (7) facing the operating element (9).

9. The operating device according to any of the preceding claims, wherein counterelements (4) are arranged on the side of the support (7) facing away from the operating element (9).

10. The operating device according to any of the preceding claims, wherein the operating element (9) is reversible between two positions, wherein in each of the two positions the operating element is movable relative to the support (7) and moves at least one magnet (12, 15) along a plurality of ferromagnetic counterelements (4, 24).

11. The operating device according to any of the preceding claims, wherein the repeating pattern of the counterelements (4, 24) along the movement path is at least partially constant.

12. The operating device according to any of the preceding claims, wherein the repeating pattern of the counterelements (4, 24) along the movement path is at least partially variable.

13. The operating device according to any of the preceding claims, wherein the distance between the counterelements (4, 24) is different with the same repeating pattern.

14. The operating device according to any of the preceding claims, wherein the space between two adjacent counterelements (4, 24) extends transversely to the moving direction of the magnet (12, 15).

15. The operating device according to any of the preceding claims, wherein the space (5) between two adjacent counterelements (4, 24) extends obliquely to the moving direction of the magnet (12, 15).

## Revendications

1. Dispositif de commande présentant
1.1 un support (7) et un élément de commande (9) mobile par rapport à ce support,
1.2 au moins un aimant (12, 15) entraîné sur une piste de déplacement par l'élément de commande (9) lors de son déplacement de commande et
1.3 plusieurs éléments complémentaires (4) dotés d'une propriété ferromagnétique et
1.4 disposés parallèlement à la piste de déplacement de l'aimant (12, 15) à petite distance de ce dernier sur le support (7) et
1.5 exerçant sur ce dernier un effet alternativement plus grand et plus petit le long de la piste de déplacement de l'aimant (12, 15),
**caractérisé en ce que**
1.6 les éléments complémentaires (4) sont formés d'une pâte de ferrite apte à être sérigraphiée appliquée sur le support.

2. Dispositif de commande selon la revendication 1, dans lequel les éléments complémentaires (4) dotés de la propriété ferromagnétique présentent un écart mutuel.

3. Dispositif de commande selon les revendications 1 ou 2, dans lequel les éléments complémentaires (4) présentent des épaisseurs et/ou des largeurs différentes.

4. Dispositif de commande selon l'une des revendications précédentes, dans lequel l'extension de l'aimant (12, 15) dans la direction de la piste de déplacement est au plus aussi grande que l'extension d'un élément complémentaire (4) dans la même direction.

5. Dispositif de commande selon l'une des revendications précédentes, dans lequel l'aimant (12, 15) est un aimant permanent, en particulier en un matériau à base de terres rares.

6. Dispositif de commande selon l'une des revendications précédentes, dans lequel l'aimant (12) est appliqué sur l'élément de commande (9).

7. Dispositif de commande selon l'une des revendications précédentes, dans lequel un aimant (15) est appliqué sur un élément supplémentaire (13) entraîné conjointement avec l'élément de commande (9).

8. Dispositif de commande selon l'une des revendications précédentes, dans lequel des éléments complémentaires (4) sont disposés sur le côté du support (7) tourné vers l'élément de commande (9).

9. Dispositif de commande selon l'une des revendications précédentes, dans lequel des éléments complémentaires (4) sont disposés sur le côté du support (7) non tourné vers l'élément de commande (9).

10. Dispositif de commande selon l'une des revendications précédentes, dans lequel l'élément de commande (9) peut être commuté entre deux positions, en ce qu'il peut être déplacé par rapport au support (7) dans chacune des deux positions et en ce qu'il déplace au moins un aimant (12, 15) devant plusieurs éléments ferromagnétiques complémentaires (4, 24).

11. Dispositif de commande selon l'une des revendications précédentes, dans lequel le rapport des éléments complémentaires (4, 24) le long de la piste de déplacement est au moins en partie constant.

12. Dispositif de commande selon l'une des revendications précédentes, dans lequel le rapport des éléments complémentaires (4, 24) le long de la piste de déplacement est au moins en partie variable.

13. Dispositif de commande selon l'une des revendications précédentes, dans lequel la distance entre les éléments complémentaires (4, 24) est différente du même rapport.

14. Dispositif de commande selon l'une des revendications précédentes, dans lequel l'espace intermédiaire entre deux éléments complémentaires (4, 24) voisins s'étend transversalement par rapport à la direction de déplacement de l'aimant (12, 15).

15. Dispositif de commande selon l'une des revendications précédentes, dans lequel l'espace intermédiaire (5) entre deux éléments complémentaires (4, 24) voisins s'étend obliquement par rapport à la direction de déplacement de l'aimant (12, 15).
